# EUROPEAN PATENT APPLICATION

(11) **EP 1 892 988 A1**
(43) Date of publication of application: **27.02.2008**
(21) Application number: 06766731.1
(22) Date of filing: 14.06.2006
(51) Int. Cl.: H04Q 7/38, H04L 9/36

(54) **CONCEALING DEVICE AND CONCEALING METHOD**

(30) Priority: 15.06.2005 JP 2005175779
(71) Applicant: NTT DoCoMo INC., Chiyoda-ku Tokyo 100-6150 (JP)
(72) Inventor: HARADA, Atsushi c/o I.P.D. NTT DoCoMo, Inc., Tokyo 1006150 (JP); ISHII, Minami c/o I.P.D. NTT DoCoMo, Inc., Tokyo 1006150 (JP); ABETA, Sadayuki c/o I.P.D. NTT DoCoMo, Inc., Tokyo 1006150 (JP); NAKAMURA, Takehiro c/o I.P.D. NTT DoCoMo, Inc., Tokyo 1006150 (JP); SUZUKI, Takashi c/o I.P.D. NTT DoCoMo, Inc., Tokyo 1006150 (JP)
(74) Representative: HOFFMANN EITLE
(86) International application number: PCT/JP2006/311964
(87) International publication number: WO 2006/134985

(57) **Abstract**

A security processing apparatus performs security processing in a MAC layer in a mobile communication system. The apparatus includes a mask generation unit generating a mask by using a security sequence number and a processing unit computing a logical operation on the mask and security target data to generate encrypted data. The security sequence number comprises a hyper frame number and a system frame number. The apparatus performs the security processing by using a transport block (TB) as one unit. The transport block is used as data transmission unit from a MAC layer to a physical layer per the unit time (TTI). Since HFN and SFN are used as the security sequence number, the security sequence number can be used uniformly over all RLC modes, and the out-of-synchronization of HFN can be avoided.

## Description

### TECHNICAL FIELD

The present invention relates to an apparatus and a method for security processing in a mobile communication system.

### BACKGROUND ART

In mobile communication systems such as IMT-2000 systems, transmitted data are subjected to security processing. In non-patent document 1, security processing for radio zones in IMT-2000 systems is outlined.

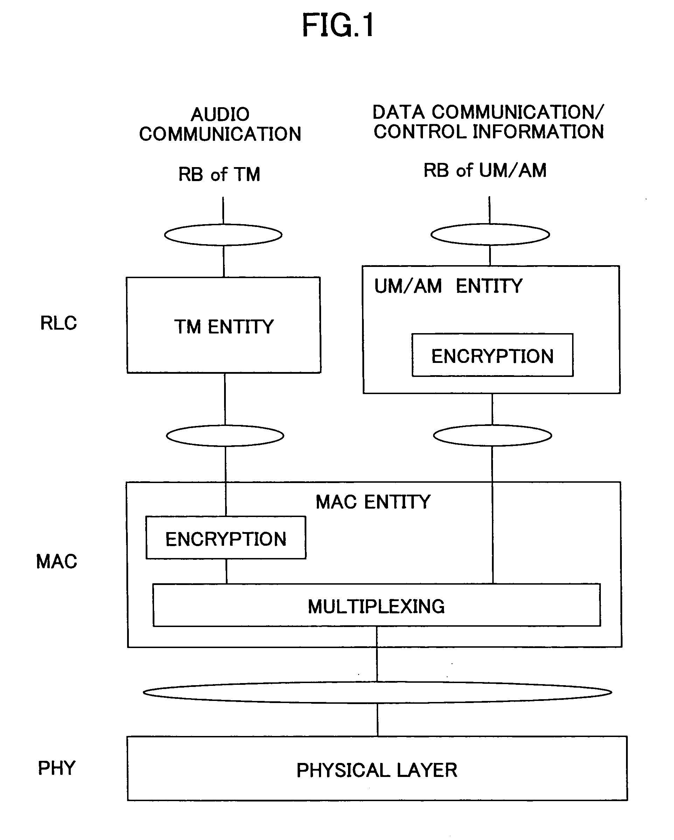

In conventional security processing schemes, as illustrated in FIG. 1, the security processing is provided to a RLC (Radio Link Control) sublayer and a MAC (Medium Access Control) sublayer separately. A protocol layer for conducting the security processing is determined depending on the operational mode of RLC protocol applied to a radio bearer (RB). For example, the security processing may be carried out in the MAC layer in transparent mode (TM) for audio communications and in the RLC layer in acknowledgement mode (AM) and unacknowledged mode (UM) for packet communication or transmission of control signals. For enhancement of the security, in addition to ciphering keys (CK), a radio bearer ID "BEARER", a security sequence number "COUNT", and others assigned for each security processing unit are combined as security processing parameters.

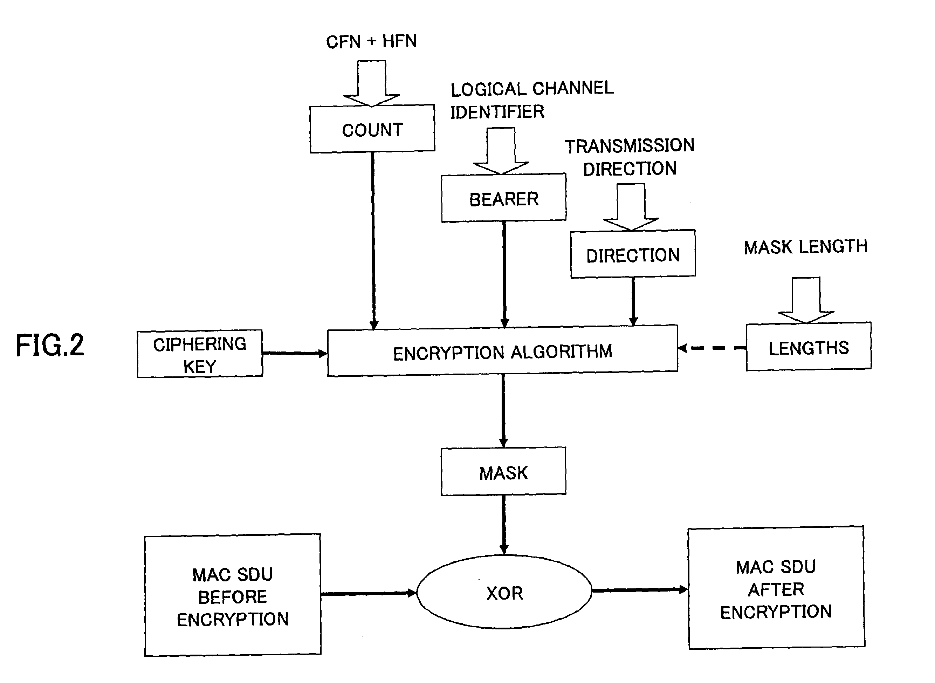

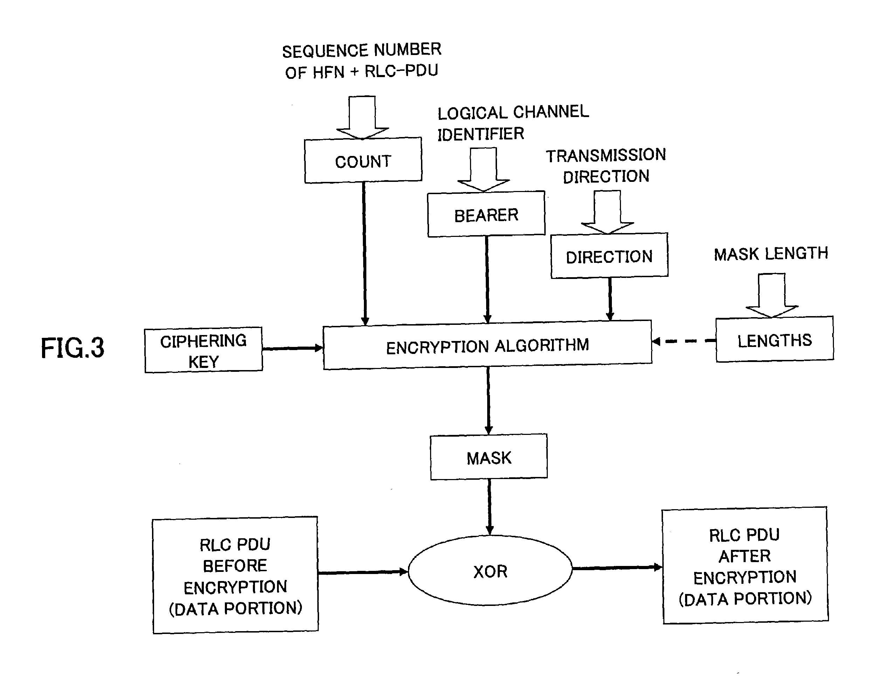

FIG. 2 and FIG. 3 show exemplary security processing in a radio zone in compliance with the IMT-2000 scheme.

FIG. 2 shows exemplary security processing applied to RB in the case of the operational mode of RLC being TM.

The security processing is carried out for each MAC-SDU (Service Data Unit). In this case, except for the ciphering key (CK), an identifier "DIRECTION" indicative of the transmission direction (uplink/downlink) of the communication may be used together with a security sequence number "COUNT" and a logical channel identifier "BEARER", which may be generated from a combination of a connection frame number (CFN) and a hyper frame number (HFN) . Also, a security sequence common to all logical channels may be set in the security processing carried out in a MAC entity.

FIG. 3 shows exemplary security processing applied to RB in the case of the operational mode of RLC being AM or UM.

The security processing is carried out for each RLC-PDU (Protocol Data Unit). In this case, except for the ciphering key (CK), an identifier "DIRECTION" indicative of the transmission direction (uplink/downlink) of the communication may be used together with a security sequence number "COUNT" and a logical channel identifier "BEARER" associated with the PDU, which may be generated from a combination of a sequence number (SN) and a hyper frame number (HFN) assigned for the RLC protocol data unit (RLC-PDU). Also, a different security sequence "COUNT" is set for each logical channel in the security processing carried out in a RLC entity.
Non-patent document 1: 3GPP TS33.102, chapter 6.6
Non-patent document 2: 3GPP TR25.859, chapter 9.1
Non-patent document 3: 3GPP TR25.913, chapter 6.1

### DISCLOSURE OF INVENTION

### [PROBLEM TO BE SOLVED BY THE INVENTION]

In general, it is desirable that the security processing be fulfilled with high security strength while the processing delay involved in the security processing is suppressed. In addition, it is desirable that the security processing can be provided in a unified scheme independently of the type of traffic, channel or radio bearer and the operational mode of the RLC from the viewpoint of simplification of the apparatus architecture. Also, it is necessary to use a complex security algorithm for enhancement of the security strength. Thus, it is desirable to reduce the number of protocol units (PU number) subjected to the security processing per unit time such as transmission time interval (TTI) for the viewpoint of the workload. In other words, it is desirable that the PUs have as large a payload size as possible.

Also, the PDU size of MAC-SDU or RLC-PDU is constant at about 40 bytes in length in conventional IMT-2000 systems. In conventional security processing, thus, wider bandwidth of the radio bearer transmission rate due to introduction of new techniques such as HSDPA (see non-patent document 2) and Evolved UTRAN (see non-patent document 3) may increase the number of protocol units conducting the security processing per unit time and lead to workload growth. For example, for the estimated radio transmission rate of 100 Mbps, if TTI length is set to be 2 ms similar to HSDPA, information of about 25,000 bytes can be transmitted for each TTI. Consequently, supposing that the same PDU size (42 bytes) and the same TTI length as HSDPA are provided, the security processing must be performed on about 600 RLC-PDUs per TTI of 2 ms for the maximum transmission rate (100 Mbps) specified in Evolved UTAN. Compared to a conventional scheme, this may increase the amount of processing to about seven times due to the ratio with the maximum transmission rate of 14.4 Mbps of the current HSDPA, resulting in the increased workload.

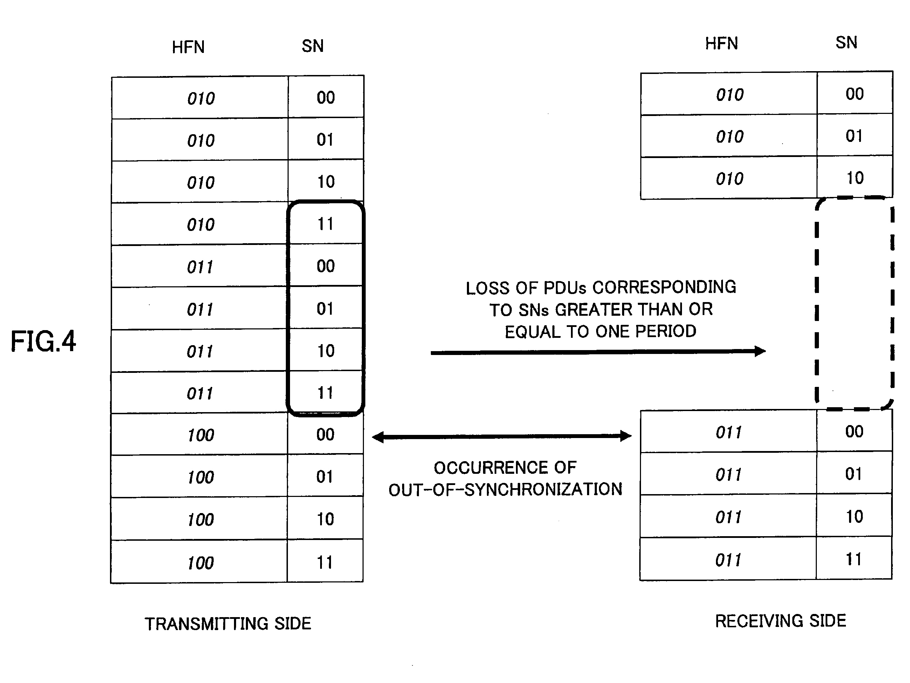

In addition, the sequence number used as a security parameter must be synchronized in transmission and reception. Once HFN is synchronized at establishment of a connection between a network side (RNC) and a mobile station, it is incremented for each period of the sequence number (SN or CFN) in both the transmitting side and the receiving side separately in order to keep the security. Thus, there may be problem that if the number of successively lost PDUs is greater than or equal to the single period of the sequence number, the HFN of the transmitting side and the receiving side may be out of synchronization. FIG. 4 shows an exemplary case where the periods of SN and HFN are set to be 4 and 8, respectively; that is, the period of the security sequence number becomes 32 (=8 x 4). The HFN of the transmitting side is incremented, but if greater than or equal to four PDUs are successively lost in the receiver side, the HFN of the receiving side would be incremented with delay of one period, resulting in out-of-synchronization of HFN. More specifically, since the number of digits of the sequence number in RLC-UM is equal to 7, the loss of 127 RLC-PDUs may lead to out-of-synchronization.

The present invention is intended to address at least one of the above-mentioned problems, and has an object to provide an apparatus and a method for security processing enabling delay of the security processing and the frequency of out-of-synchronization to be reduced.

### [MEANS FOR SOLVING THE PROBLEM]

According to an embodiment of the present invention, a security processing apparatus for conducting security processing is used in the MAC layer of a mobile communication system. The security processing apparatus includes means for using the security sequence number to generate a mask and means for performing logical operations on the mask and secured data and generating encrypted data. The security sequence number includes the hyper frame number and the system frame number.

### [ADVANTAGE OF THE INVENTION]

According to the embodiments of the present invention, it is possible to at least reduce the delay of the security processing and the frequency of the out-of-synchronization of security in a mobile communication system.

### BRIEF DESCRIPTION OF DRAWINGS

FIG. 1 shows exemplary security processing in IMT-2000;
FIG. 2 shows exemplary security processing in RLC-TM;
FIG. 3 shows exemplary security processing in RLC-UM and RLC-AM;
FIG. 4 is a schematic diagram illustrating exemplary out-of-synchronization;
FIG. 5 shows an exemplary configuration of MAC layer security in a transmitting side;
FIG. 6 shows an exemplary configuration of MAC layer security in a receiving side;
FIG. 7 shows an exemplary security processing unit;
FIG. 8 shows exemplary security processing according to the present invention;
FIG. 9 shows an exemplary advantage of the present invention; and
FIG. 10 shows an exemplary MAC security sublayer.

### LIST OF REFERENCE SYMBOLS

- RAB:: Radio Access Bearer
- TM:: Transparent Mode
- UM:: Unacknowledgement Mode
- AM:: Acknowledgement Mode
- RLC:: Radio Link Control
- MAC:: Medium Access Control
- PHY:: Physical layer
- CFN:: Connection Frame Number
- HFN:: Hyper Frame Number
- SFN:: System Frame Number
- SDU:: Service Data Unit
- PDU:: Protocol Data Unit
- XOR:: Exclusive OR
- LCH:: Logical Channel
- TrCH:: Transport Channel
- HARQ:: Hybrid Auto retransmission ReQuest

### BEST MODE FOR CARRYING OUT THE INVENTION

In a MAC secured sublayer according to one embodiment of the present invention, security processing is conducted by using a transport block (TB) as the processing unit. The transport block serves as the data transmission unit from a MAC layer to a physical layer per the unit time (TTI). A hyper frame number (HFN) and a system frame number (SFN) are used as the security sequence number, and thus a uniform security sequence number is available to all RLC modes. By combining HFN with SFN as the security sequence number, the out-of-synchronization of HFN can be avoided.

Since the security processing unit is integrated with a MAC sublayer, the architecture of a mobile station can be simplified. Conventionally, the security processing is repeated for individual RLC-PDUs. According to one embodiment of the present invention, however, the security processing is performed on PDUs in the MAC layer collectively, resulting in reduction in the workload and the processing delay. As a result, the security processing system can be simplified by using the uniform sequence number independently of the RLC modes. In addition, it is possible to reduce the occurrence probability of the out-of-synchronization of security parameters by using the system frame number.

### [First Embodiment]

Although embodiments of the present invention are focused on downlink transmission below, the present invention is obviously applicable to uplink transmission.

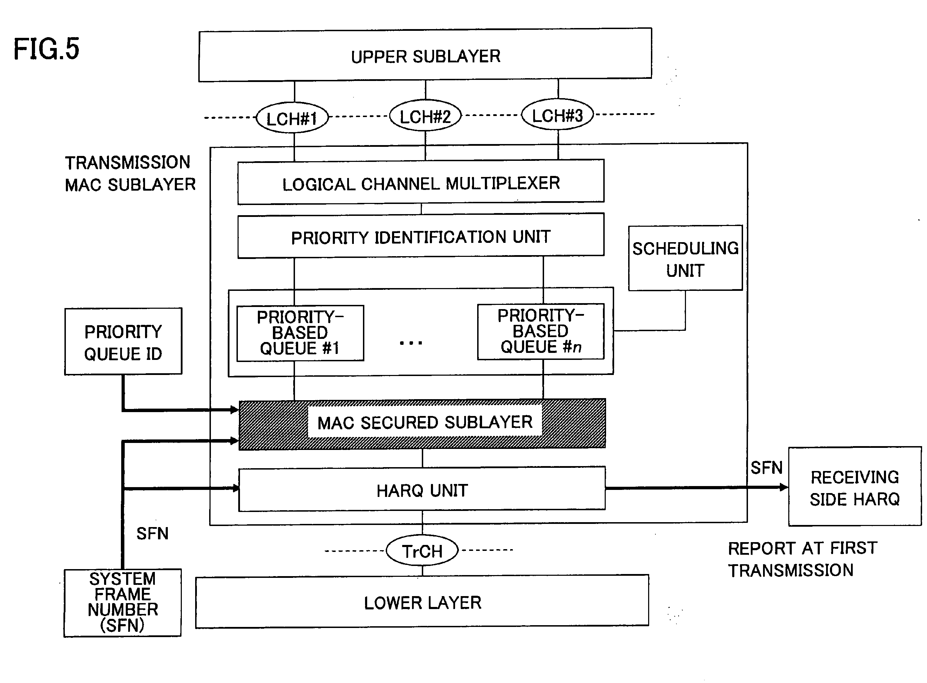

FIG. 5 shows an exemplary configuration of a MAC sublayer including a MAC secured sublayer in a transmitting side according to one embodiment of the present invention. The transmitting side MAC sublayer includes a logical channel (LCH) multiplexer, a priority identification unit, priority-based queues, a scheduling unit, a MAC secured sublayer and a transmitting side HARQ unit. The logical channel multiplexer multiplexes several different logical channels transmitted from an upper layer and transmits data to a subsequent priority identification unit. The priority identification unit assigns inter-flow transmission priorities to different data flows multiplexed by the logical channel multiplexer, for example, based on signaling information supplied from an upper layer, and distributes the data flows to the respective priority-based queues. In the priority-based queue, the transmitted data are buffered, and the transmission timing is assigned based on instructions from the scheduling unit. Once the transmission timing is assigned, the priority-based queue extracts PDU data incoming from an upper layer from the queue depending on the amount of radio resources assigned to Layer 1. Then, the priority-based queue generates a transport block (TB) and transmits the data to the MAC secured sublayer. The MAC secured sublayer performs security processing on the data and transmits the resulting data to the transmitting side HARQ unit. The HARQ unit manages the data delivery and retransmits data depending on occurrence of a data transmission error in a radio zone.

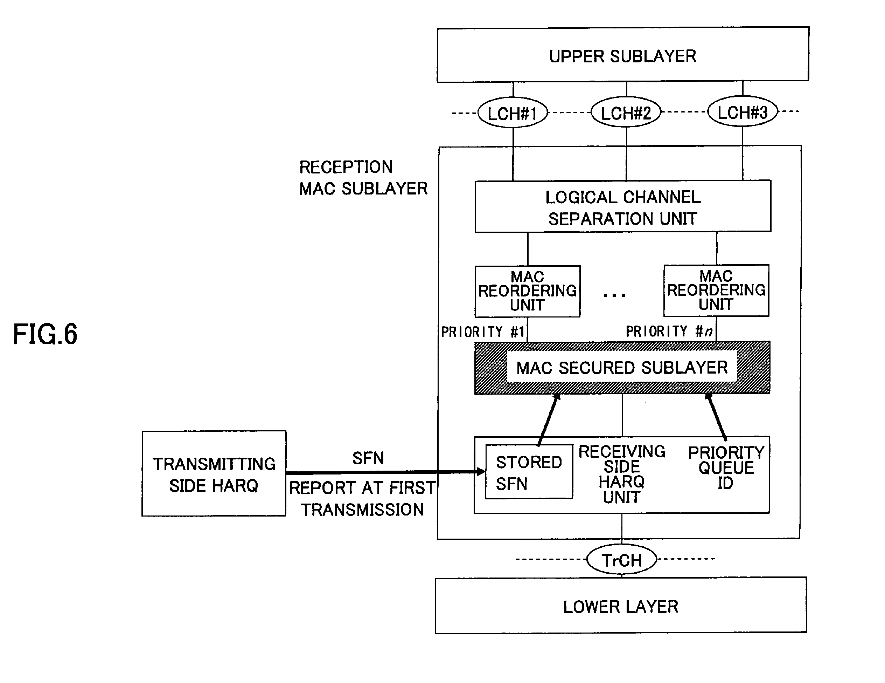

FIG. 6 shows an exemplary configuration of a receiving side MAC sublayer including a MAC secured sublayer. The receiving side MAC sublayer includes a logical channel separation unit, a MAC reordering unit, a MAC secured sublayer and a receiving side HARQ unit. The receiving side HARQ unit issues a retransmission request to the transmitting side HARQ unit based on a decoding result of data supplied from a lower layer. When the data have been correctly received, the receiving side HARQ unit transmits the decoded data to the MAC secured sublayer. The MAC secured sublayer performs de-security processing on the received data and transmits the resulting data to the MAC reordering unit. The MAC reordering unit buffers the received data so as to maintain order consistency and reports the order guaranteed data to the logical channel separation unit. The logical channel separation unit separates logical channels multiplexed in the transmitting side and transmits the data to an upper layer for the respective logical channels.

The MAC secured sublayer is informed of a security sequence number (SFN) and a priority queue ID (BEARER) as parameters for security processing. The receiving side MAC secured sublayer may be informed of the secured parameters, for example, in such a manner that a common control channel is used to report the transmission timing, that is, SFN, of the relevant TB as scheduling assignment information. Since the transmission direction (DIRECTION) is already known, it does not have to be reported.

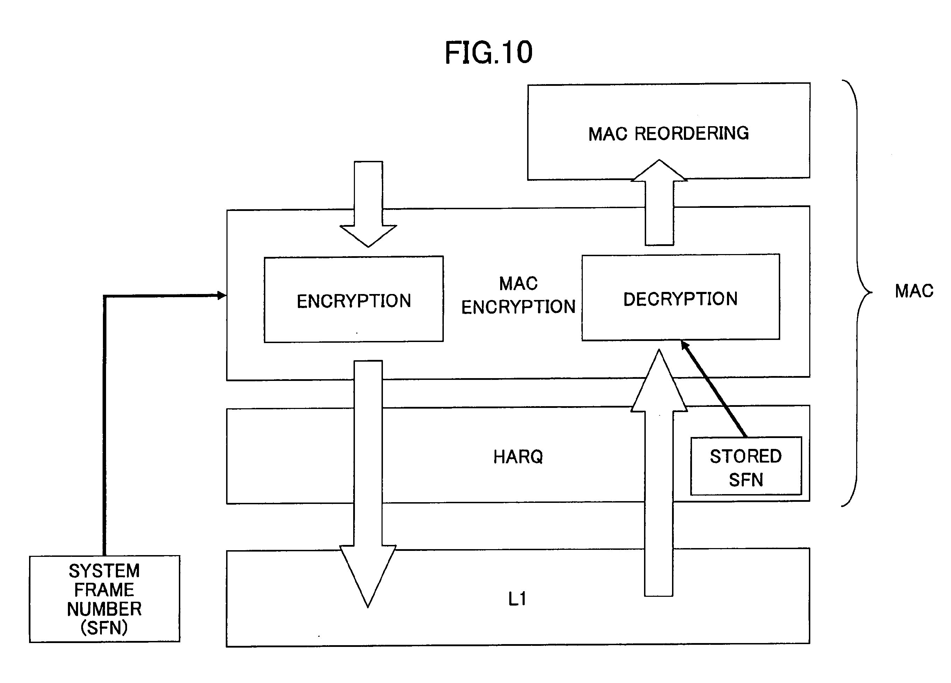

In the embodiment as illustrated in FIG. 5 and FIG. 6, the MAC sublayer may operate as illustrated in FIG. 10. Specifically, the transmitting side MAC sublayer uses the system frame number (SFN) to encrypt a logical channel and supplies it to the physical layer. Then, the receiving side MAC sublayer performs decryption based on the system frame number (SFN) and reports the result to an upper layer.

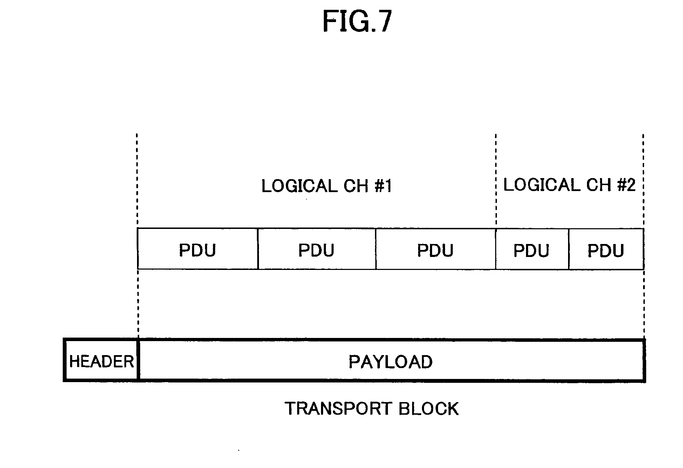

FIG. 7 shows an exemplary security processing unit. In this example, multiple PDUs having the same priority and belonging to different logical channels are multiplexed into a single transport block and are transmitted to a lower layer for each unit time (TTI). In conventional methods, the security processing is performed on each PDU. According to this embodiment, on the other hand, a collection of the PDUs multiplexed in the logical channel multiplexer is processed as one processing unit in the security processing. This processing unit may be referred to as a protocol unit (PU). Since multiple PDUs are collectively encrypted, it is possible to reduce the number of PUs to be processed in the unit time (TTI), resulting in reduced workload and delay.

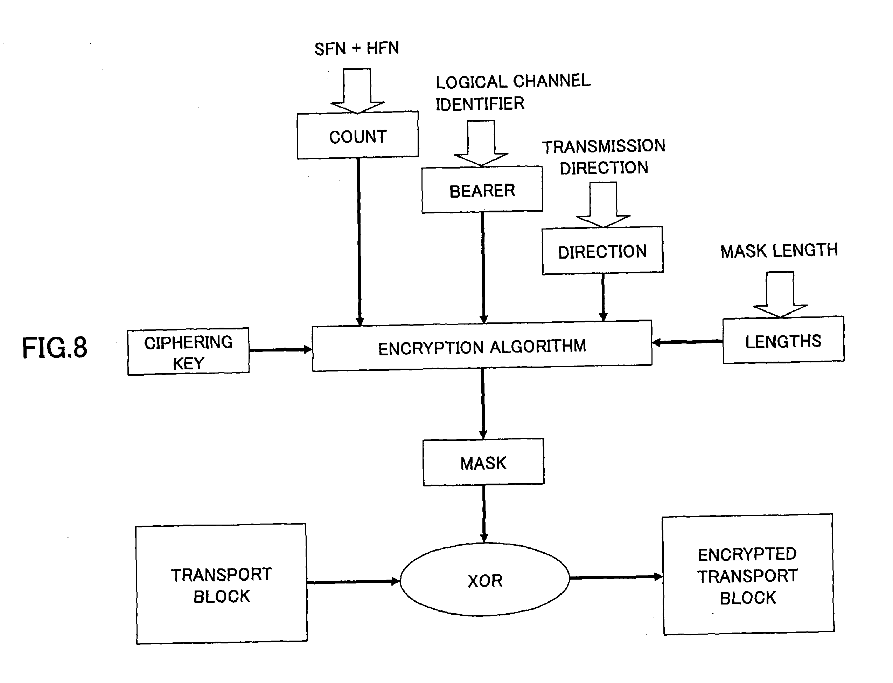

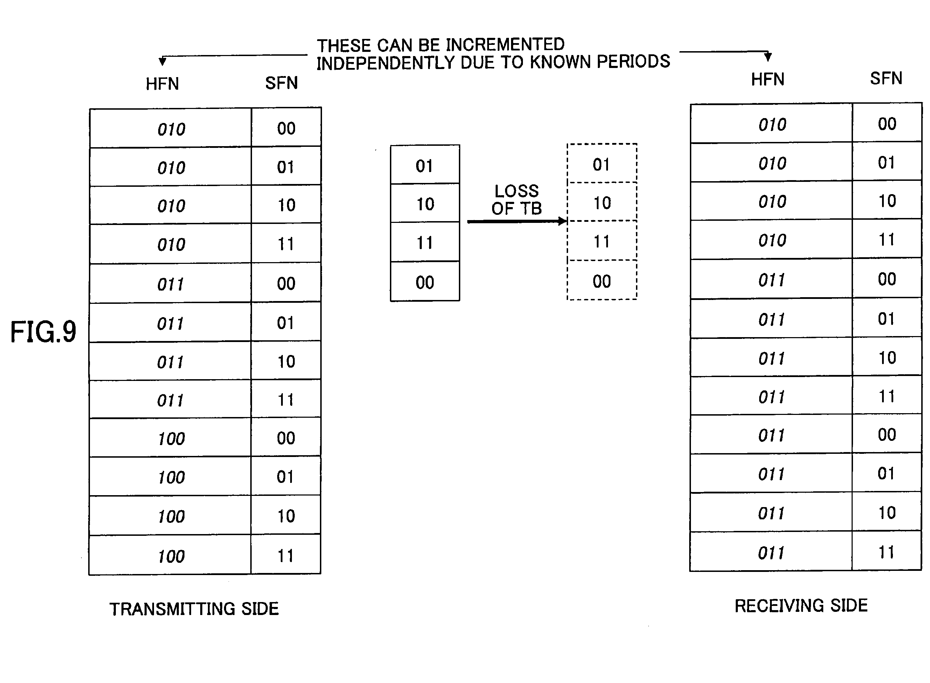

FIG. 8 shows exemplary security processing in a MAC secured sublayer according to this embodiment. An operation (XOR) is computed between a bit sequence of a PU (transport block) arriving at the MAC secured sublayer and a secured mask sequence generated by a security algorithm, and the generated secured PU (ciphered transport block) is transmitted to the transmitting side HARQ unit illustrated in FIG. 4. The security algorithm uses a ciphering key (CK) for generating the secured mask sequence, the security sequence number "COUNT", the transmission direction "DIRECTION" and the priority queue number "BEARER" as parameters. The security sequence number "COUNT" is configured to combine HFN with SFN. SFN is the sequence number specific to a base station. SFN is reported to a mobile station managed by the base station via a common channel and is synchronized between the base station and the mobile station. SFN is incremented at a certain period of time irrespective of presence of user data. Thus, it is sufficient for keeping the synchronization that the base station and the mobile station increment HFN based on the respective SFN periods even if the incrementing is done independently. As a result, it is possible to eliminate the problem of out-of-synchronization caused by packet loss greater than or equal to one period in conventional methods that use the sequence number assigned for individual PDUs (see FIG. 9) . Also, the security parameter (sequence number) may mismatch only if the transmission delay of a transport block due to retransmission is greater than the SFN period. For example, for 12 bit SFN having the TTI length of 2 ms, when delay greater than or equal to 8.192 (=2 x 10⁻³ x 2¹²) seconds occurs, the security parameter may mismatch. However, the line quality and the number of retransmissions can be actually designed to prevent such significant delay. Thus, the occurrence probability of parameter mismatch can be significantly reduced compared to conventional techniques.

The above-mentioned embodiments have been focused on the downlink transmission. However, the present invention is not limited to the embodiments of downlink transmission and is obviously applicable to the security processing for the uplink transmission where a mobile station serves as a transmitting side.

This international patent application is based on Japanese Priority Application No. 2005-175779 filed on June 15, 2005, the entire contents of which are hereby incorporated by reference.

## Claims

1. A security processing apparatus for security processing in a MAC layer in a mobile communication system, comprising:
a mask generation unit generating a mask by using a security sequence number; and
a processing unit computing a logical operation on the mask and security target data to generate encrypted data,
wherein the security sequence number comprises a hyper frame number and a system frame number.

2. The security processing apparatus as claimed in claim 1, wherein the system frame number comprises a sequence number specific to a base station and is reported to a mobile station via a common channel.

3. The security processing apparatus as claimed in claim 1, wherein information including the security sequence number, a logical channel identifier and a mask length is supplied to an input of a predefined encryption algorithm, and the mask is derived in accordance with the encryption algorithm.

4. The security processing apparatus as claimed in claim 1, wherein the logical operation comprises an exclusive OR operation.

5. A method for security processing in a MAC layer in a mobile communication system, comprising the steps of:
generating a mask by using a security sequence number; and
computing a logical operation on the mask and security target data to generate encrypted data,
wherein the security sequence number comprises a hyper frame number and a system frame number.
